# EUROPEAN PATENT APPLICATION

(11) **EP 2 031 439 A1**
(43) Date of publication of application: **04.03.2009**
(21) Application number: 07291050.8
(22) Date of filing: 29.08.2007
(51) Int. Cl.: G02F 1/35

(54) **Optical phase conjugation device, beam splitting device and method for optical phase conjugation**

(71) Applicant: Alcatel Lucent, 75008 Paris (FR)
(72) Inventor: Lefrancois, Mathieu, 91140 Villebon sur Yvette (FR); Charlet, Gabriel, 91190 Villiers la Bacle (FR)
(74) Representative: Kohler Schmid Möbus

(57) **Abstract**

An optical phase conjugation device (OPC) for coupling an incoming signal and a pump wave comprising a nonlinear crystal (NLC), a beam splitting device (BSD) comprising a polarization beam splitter (PBS) with a TE output and a TM output, whose both outputs are connected to the nonlinear crystal (NLC), a polarization rotator (TE/TM) at the TE output, an optical circulator (C), the beam splitting device (BSD) being connected to the circulator, and an optical pump source (OPS), is characterized in that the beam splitting device (BSD) comprises a first optical plate (1), the first optical plate (1) having its maximal reflection coefficient at a signal spectral band with bandwidth of 1nm around the pump wavelength, and the optical pump source (OPS) being connected to the beam splitting device (BSD) thereby directing the pump wave to the first optical plate (1). Thus pump polarization can be managed by coupling signals without adding polarization-dependent gain or loss.

## Description

The invention relates to an optical phase conjugation device for coupling an incoming signal and a pump wave comprising a nonlinear crystal for performing nonlinear conversion of the incoming signal, a beam splitting device comprising a polarization beam splitter with a TE output and a TM output, whose both outputs are connected to the nonlinear crystal, a polarization rotator at the TE output of the polarization beam splitter, an optical circulator for feeding the incoming signal to the beam splitting device, the beam splitting device being connected to the optical circulator and an optical pump source for producing the pump wave.

Such an optical phase conjugation device is known from US 6,862,130 B2.

### Background of the invention

Optical phase conjugation is a technique based on nonlinear conversion of an incoming signal in a nonlinear device (mostly PPLN crystal) that can be used in long-haul optical transmission links to compensate for propagation impairments only once in the link. It allows using only one line fibre (without dispersion compensating fibres) in the whole link. Implementation of optical phase conjugation is especially interesting for long-haul point-to-point submarine links, where a larger number of dispersion compensating modules can be substituted by only one optical phase conjugation device.

However optical phase conjugation is quite complex to implement and to install in an optical link, since it works only at high and well-adjusted temperatures, must be pumped with an high-power laser, and works only with one light polarization.

The problem of the known optical phase conjugation devices is that the polarization of the pump wave needs to be adjusted to have the same power at both outputs of the polarization beam splitter, to avoid polarization-dependent gain or loss. However since the pump wave propagates (with the incoming signal) over a single mode fibre, its polarization properties can change with the time when arriving at the polarization beam splitter, and in particular during the 25 years of life duration of the system. A polarization controller is then needed before the coupler, to be able to provide and adjust the same pump wave powers at both outputs of the polarization beam splitter, and no feedback signal can be easily used to automatically adjust the polarization.

### Object of the invention

It is an object of the invention to propose an optical phase conjugation device, a beam splitting device and a method to manage pump polarization by coupling them without adding polarization-dependent gain or loss, as observed in the prior art.

### Short description of the invention

This object is achieved by an optical phase conjugation device according to claim 1, a beam splitting device according to claim 7 and a method according to claim 9.

The beam splitting device of the inventive optical phase conjugation device further comprises a first optical plate for reflecting the pump wave, the first optical plate having its maximal reflection coefficient at a signal spectral band with bandwidth of 1 nm around the pump wavelength. Further the optical pump source is connected to the beam splitting device thereby directing the pump wave to the first optical plate.

With the inventive optical phase conjugation device coupling between the incoming signal and the pump wave is performed in free space. This configuration allows not to be penalized by polarization-management which is needed in state of the art.

In an advantageous embodiment of the inventive optical phase conjugation device the beam splitting device further comprises a polarizer.

Further it is advantageous that the beam splitting device further comprises a quarter-wave optical plate in order to make the pump wave circularly polarized. No polarization control, which must be permanently adjusted, is needed, no polarization mode dispersion is generated, and no polarization-dependent gain is created since the pump wave with circular polarization is automatically split into two polarizations with same power at each output of the polarization beam splitter. An equal power repartition can also be performed if the pump wave is linearly polarized at 45° from the axes of the polarization beam splitter.

In a preferred embodiment the first optical plate has its maximal transmission coefficient around the signal spectral bands of the incoming signal. Thus the incoming signal can pass through the first optical plate with minimal loss.

In a highly preferred embodiment the beam splitting device further comprises a second optical plate having its maximal reflection coefficient at half the pump wavelength. Therewith it can be avoided that the second harmonic reaches the circulator.

A further advantageous embodiment provides a photodiode which is coupled to the second optical plate in order to visualize the reflected second harmonic of the pump wave generated by the nonlinear crystal.

The invention further relates to a beam splitting device comprising an input port, a first optical plate for reflecting a pump wave, a pump port for feeding a pump wave to the first optical plate, a polarization beam splitter for splitting the incoming signal and the pump wave, and two output ports for transferring the split signals. The inventive beam splitting device can be used with the inventive optical phase conjugation device. Each port can be provided with a collimator.

An especially preferred embodiment of the inventive beam splitting device comprises a second optical plate having its maximal reflection coefficient at half the pump wavelength for reflecting the second harmonic of the pump wave.

The invention further relates to a method for optical conjugation of an incoming signal wherein an optical circulator receives an incoming signal which is fed to a beam splitting device, the incoming signal and a pump wave are coupled prior to a polarization beam splitter, the pump wave and the incoming signal are split by the polarization beam splitter and are transferred to a nonlinear crystal for conversion, and wherein after leaving crystal from both sides of the nonlinear crystal the converted signals are recombined by the polarization beam splitter to an outcoming wave after a polarization rotation of the original TM polarization (transverse-magnetic polarization) mode being rotated to TE polarization (transverse-electric polarization). The inventive method is characterized in that the pump wave and the incoming signal are coupled after the optical circulator whereby the pump wave is directed to a first optical plate, the pump wave is at least partially reflected by the first optical plate, and the incoming signal and the reflected pump wave are directed to the polarization beam splitter, and the outcoming wave is split back into a remaining signal and a residual pump wave by the first optical plate, whereby the remaining signal is fed to the optical circulator.

In a preferred variant of the inventive method the optical pump wave is circularly polarized by leading the pump wave through a polarizer and a quarter-wave optical plate.

Further characteristics and advantages of the invention are provided in the following description of exemplary embodiments of the invention, with reference to the figures of the drawing, which shows details that are significant in the context of the invention and in the claims. The individual characteristics can be implemented individually by themselves, or several of them can be implemented in any desired combination in a variant of the invention.

### Drawing

The invention is shown in the drawing.
- Fig. 1: shows an optical phase conjugation device according to the invention;
- Fig. 2: shows a optical phase conjugation submarine system with optical phase conjugation devices according to the invention; and
- Fig. 3: shows an optical phase conjugation device according to the state of the art.

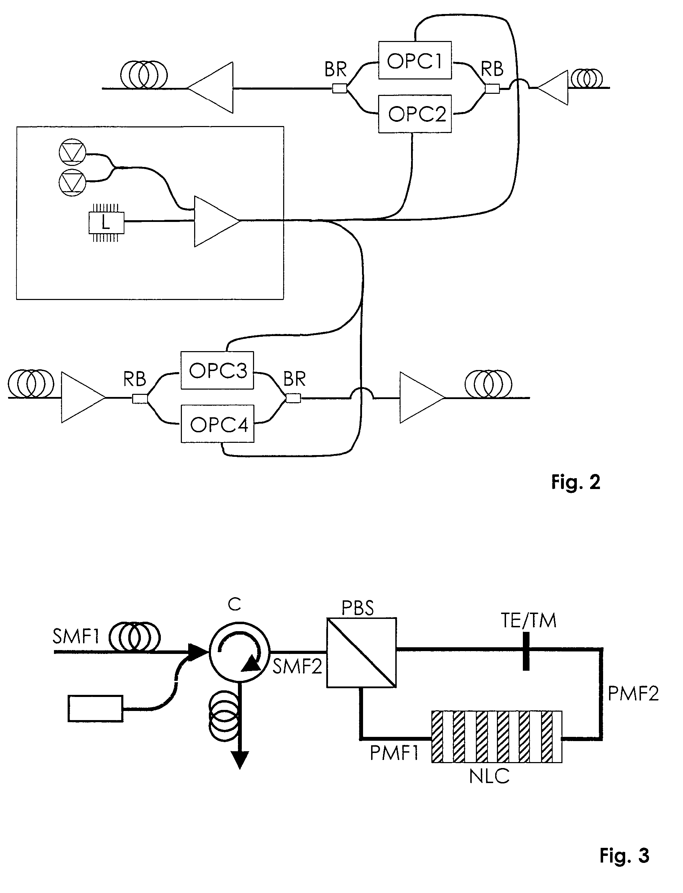

**Fig. 3** shows an optical phase conjugation device as it is known from the state of the art. A pump wave and an incoming signal which is propagating over a single mode fibre **SMF1** (or other non-polarization-maintaining fibre) are coupled together. Both, the pump wave and the incoming signal then proceed together through an optical circulator **C** and a polarization beam splitter **PBS** with a TE output and a TM output. The pump wave and the incoming signal arrive at the polarization beam splitter PBS through a further single mode fibre **SMF2** to avoid polarization mode dispersion. After passing the polarization beam splitter PBS the incoming signal and the pump wave are split into a TM polarization mode and a TE polarization mode. The signals with TM polarization are led through a polarization-maintaining fibre **PMF1** directly to a nonlinear crystal **NLC,** whereas the signals with TE polarization are led through a further polarization-maintaining fibre **PMF2** after a polarization rotation from TE polarization to TM by a polarization rotator **TE/TM.** Then the pump wave and the incoming signal are transferred into the crystal NLC with TM polarization in both directions. The pump wave and the incoming signal interact together, through crystal nonlinear properties, in each direction. Then the pump wave and the incoming signal leave the nonlinear crystal NLC from both sides of the crystal NLC and are recombined in the polarization beam splitter PBS after a polarization rotation of the original TM polarization mode being rotated to TE polarization by the polarization rotator TE/TM.

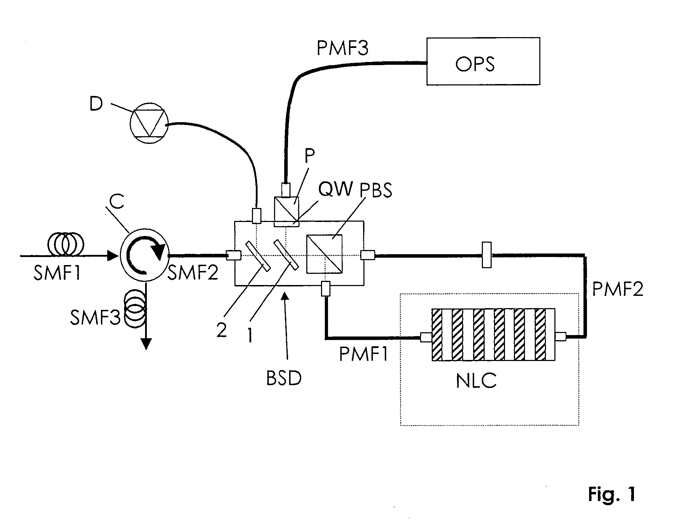

A preferred embodiment of an inventive optical phase conjugation device OPC is shown in **Fig. 1****.** The optical circulator C is connected to single mode fibres SMF1, SMF2, SMF3 at its inputs and outputs, whereby the single mode fibre SMF2 leads to a beam splitting device **BSD** according to the invention. The incoming signal is fed via the circulator C to an input port of the beam splitting device BSD. In contrast to the state of the art the inventive beam splitting device BSD comprises not only the polarization beam splitter PBS with a TE output and a TM output for splitting the incoming signal and the pump wave, but further comprises a first optical plate **1** for reflecting the pump wave, a pump port for feeding the pump wave to the first optical plate 1, and a second optical plate **2** for reflecting the second harmonic of the pump wave. The optical plates 1, 2 must have strong reflection coefficient for the pump wavelength and strong transmission coefficient for incoming signal wavelengths close to the pump wavelengths (down to 100GHz).

The incoming signal is fed to the beam splitting device BSD via the optical circulator C and single mode fibres SMF1, SMF2 and passes through optical plates 2 and 1. The pump wave is produced by an optical pump source **OPS** and is fed to the beam splitting device BSD via a polarization maintaining fibre **PMF3,** a polarizer **P,** a quarter wave optical plate **QW,** and via reflection at the first optical plate 1. The incoming signal and the pump wave are then coupled prior to the polarization beam splitter PBS. In contrast to the state of the art coupling between the incoming signal and the pump wave is performed in free space, and before polarization maintaining fibre propagation. Then pump wave and incoming signal are split in the polarization beam splitter PBS, each polarization being transferred to the nonlinear crystal NLC, preferably a periodically poled lithium niobate, through a different polarization maintaining fibre PMF1, PMF2, as described above. Incoming residual signal, pump wave, and converted signals are then recombined in the polarization beam splitter PBS, and propagate together up to optical plate 1. Here the residual pump wave is rejected by reflection. The other signals are transmitted up to optical plate 2 which isolates the residual doubled pump wave (for temperature optimization of the nonlinear crystal NCL). The residual doubled pump wave can be visualized by a photodiode **D**. The remaining signal is transmitted by the second optical plate 2 up to the circulator C to continue its propagation into single mode fibre SMF3.

With the inventive optical phase conjugation device the incoming signal is multiplexed with the pump wave after the circulator, just before the polarization beam splitter, to ensure a 50/50 split of pump wave power at both outputs of the polarization beam splitter.

**Fig. 2** shows an optical phase conjugation submarine system. In the shown submarine optical cables an inventive optical phase conjugation device OPC is implemented to phase-conjugate all signals propagating in this cable in both directions. In order to phase-conjugate a full spectral band with the pump wavelength placed at its middle, this band is split with a Red/Blue filter **RB** to make each half-band be phase-conjugated with its own optical phase conjugation device **OPC1, OPC2, OPC3, OPC4.** After optical phase conjugation the blue band is converted to an idler red band and vice-versa. Another Red/Blue filter **BR** is required after the optical phase conjugation device OPC1, OPC2, OPC3, OPC4 to remove the residual incoming signal bands and to recombine the full phase-conjugated spectral band. Inside a submarine cable, two optical phase conjugation devices OPC1, OPC2 are needed to conjugate the signal in one direction, and two other optical phase conjugation devices OPC3, OPC4 are needed for the other direction. Each of these optical phase conjugation devices OPC1, OPC2, OPC3, OPC4 can be pumped using a single high-power laser beam L, which is split to pump each optical phase conjugation device OPC1, OPC2, OPC3, OPC4. Two pumps or more for the high-power optical amplifier can be used to ensure the reliability of the system.

### Reference signs

- 1: first optical plate
- 2: second optical plate
- BSD: beam splitting device
- C: optical circulator
- L: laser
- NLC: non linear crystal
- OPC, OPC1, OPC2, OPC3, OPC4: optical phase conjugation device
- OPS: optical pump source
- P: polarizer
- PBS: polarization beam splitter
- PMF1, PMF2, PMF3: polarization maintaining fibre
- QW: quarter wave optical plate
- RB, BR: Red/Blue filter
- SMF1, SMF2, SMF3: single mode fibre
- TE/TM: polarization converter

## Claims

1. Optical phase conjugation device (OPC) for coupling an incoming signal and a pump wave comprising:
a nonlinear crystal (NLC) for performing nonlinear conversion of the incoming signal,
a beam splitting device (BSD) comprising a polarization beam splitter (PBS) with a TE output and a TM output, whose both outputs are connected to the nonlinear crystal (NLC),
a polarization rotator (TE/TM) at the TE output of the polarization beam splitter (PBS),
an optical circulator (C) for feeding the incoming signal to the beam splitting device (BSD), the beam splitting device (BSD) being connected to the optical circulator, an optical pump source (OPS) for producing the pump wave,
**characterized in that**
the beam splitting device (BSD) further comprises a first optical plate (1) for reflecting the pump wave, the first optical plate (1) having its maximal reflection coefficient at a signal spectral band with bandwidth of 1 nm around the pump wavelength, and
the optical pump source (OPS) being connected to the beam splitting device (BSD) thereby directing the pump wave to the first optical plate (1).

2. Optical phase conjugation device (OPC) according to claim 1 **characterized in that** the beam splitting device (BSD) further comprises a polarizer (P)

3. Optical phase conjugation device (OPC) according to claim 2 **characterized in that** the beam splitting device (BSD) further comprises a quarter-wave optical plate (QW) in order to make the pump wave circularly polarized.

4. Optical phase conjugation device (OPC) according to claim 1 **characterized in that** the first optical plate (1) has its maximal transmission coefficient around the signal spectral bands of the incoming signal.

5. Optical phase conjugation device (OPC) according to claim 1 **characterized in that** the beam splitting device (BSD) further comprises a second optical plate (2) having its maximal reflection coefficient at half the pump wavelength.

6. Optical phase conjugation device (OPC) according to claim 5 **characterized in that** a photodiode is provided which is coupled to the second optical plate (2) in order to visualize the reflected second harmonic of the pump wave generated by the crystal (NLC).

7. A beam splitting device (BSD) comprising
an input port,
a first optical plate (1) for reflecting a pump wave,
a pump port for feeding a pump wave to the first optical plate (1),
a polarization beam splitter (PBS) for splitting the incoming signal and the pump wave, and
two output ports for transferring the split signals.

8. A beam splitting device (BSD) according to claim 7 further comprising a second optical plate (2) having its maximal reflection coefficient at half the pump wavelength for reflecting the second harmonic of the pump wave.

9. Method for optical conjugation of an incoming signal
wherein an optical circulator (C) receives an incoming signal which is fed to a beam splitting device (BSD), the incoming signal and a pump wave are coupled prior to a polarization beam splitter (PBS), the pump wave and the incoming signal are split by the polarization beam splitter (PBS) and transferred to a nonlinear crystal (NLC) for conversion, and
wherein after leaving crystal (NLC) from both sides of the nonlinear crystal (NLC) the converted signals are recombined by the polarization beam splitter (PBS) to an outcoming wave after a polarization rotation of the original TM polarization mode being rotated to TE polarization,
**characterized in that**
the pump wave and the incoming signal are coupled after the optical circulator (C) whereby the pump wave is directed to a first optical plate (1),
the pump wave is at least partially reflected by the first optical plate (1), and
the incoming signal and the reflected pump wave are directed to the polarization beam splitter (PBS), and
the outcoming wave is split back into an remaining signal and a residual pump wave by the first optical plate (1), whereby the remaining signal is fed to the optical circulator (C).

10. Method according to claim 9 **characterized in that** the optical pump wave is circularly polarized by leading the pump wave through a polarizer and a quarter-wave optical plate (QW).

## Amended claims

### Amended claims in accordance with Rule 137(2) EPC.

**1.** Coupling device for coupling an incoming signal and a pump wave comprising:
a **nonlinear crystal (NLC)** for performing nonlinear conversion of the incoming signal,
a **polarization beam splitter (PBS)** with a **TE output** and a **TM output** for splitting the incoming signal as well as the pump wave,
a **polarization rotator (TEITM)** at the TE output of the polarization beam splitter (PBS),
an **optical circulator (C)** for feeding the incoming signal to the polarization beam splitter (PBS),
an **optical pump source (OPS)** for producing the pump wave,
**characterized in that**
the polarization beam splitter (PBS) is part of a **beam splitting device (BSD)** for performing free space coupling between the incoming signal and the pump wave,
the beam splitting device (BSD) further comprises
an **input port** which is connected to the optical circulator,
two **output ports,** whereby the TE output and a TM output of the beam splitting device (BSD) are both connected to the nonlinear crystal (NLC) via said output ports,
an **optical plate** (1) for reflecting the pump wave, the optical plate (1) being positioned between the input port of the beam splitting device and the polarization beam splitter, the optical plate having its maximal reflection coefficient at a signal spectral band with bandwidth of 1 nm around the pump wavelength, and
the optical pump source (OPS) being connected to the beam splitting device (BSD) thereby directing the pump wave to the optical plate (1).

**2.** Coupling device according to claim 1 **characterized in that** the beam splitting device (BSD) further comprises a polarizer (P) for polarizing the pump wave prior to reflection of the pump wave at the optical plate (1).

**3.** Coupling device according to claim 2 **characterized in that** the beam splitting device (BSD) further comprises a quarter-wave optical plate (QW) in order to make the pump wave circularly polarized prior to reflection of the pump wave at the optical plate (1).

**4.** Coupling device according to claim 1 **characterized in that** the optical plate (1) has its maximal transmission coefficient around the signal spectral bands of the incoming signal.

**5.** Coupling device according to claim 1 **characterized in that** the beam splitting device (BSD) further comprises a further optical plate (2) having its maximal reflection coefficient at half the pump wavelength for reflecting the second harmonic of the pump wave, the further optical plate (2) being positioned between the input port of the beam splitting device and the optical plate (1).

**6.** Coupling device according to claim 5 **characterized in that** a photodiode is provided which is coupled to the further optical plate (2) in order to visualize the reflected second harmonic of the pump wave generated by the crystal (NLC).

**7.** A beam splitting device (BSD) for use in a coupling device according to claim 1, the beam splitting device (BSD) comprising
an input port,
a optical plate (1) for reflecting a pump wave,
a pump port for feeding a pump wave to the optical plate (1),
a polarization beam splitter (PBS) for splitting the incoming signal and the pump wave, and
two output ports for transferring the split signals.

**8.** A beam splitting device (BSD) according to claim 7 further comprising a further optical plate (2) having its maximal reflection coefficient at half the pump wavelength for reflecting the second harmonic of the pump wave, the further optical plate (2) being positioned between the input port of the beam splitting device and the optical plate (1)..

**9.** Method for optical conjugation of an incoming signal
wherein an optical circulator (C) receives an incoming signal which is fed to a beam splitting device (BSD), the incoming signal and a pump wave are coupled prior to a polarization beam splitter (PBS), the pump wave as well as the incoming signal are split by the polarization beam splitter (PBS) into a TM polarization mode and a TE polarization mode,and transferred to a nonlinear crystal (NLC) for conversion, and
wherein after leaving crystal (NLC) from both sides of the nonlinear crystal (NLC) the converted signals are recombined by the polarization beam splitter (PBS) to an outcoming wave after a polarization rotation of the original TM polarization mode being rotated to TE polarization,
**characterized in that**
the pump wave and the incoming signal are coupled after the optical circulator (C) whereby the pump wave is directed to an optical plate (1),
the pump wave is at least partially reflected by the optical plate (1), and
the incoming signal and the reflected pump wave are directed to the polarization beam splitter (PBS), and
the outcoming wave is split back into an remaining signal and a residual pump wave by the optical plate (1), whereby the remaining signal is fed to the optical circulator (C).

**10.** Method according to claim 9 **characterized in that** the optical pump wave is circularly polarized by leading the pump wave through a polarizer and a quarter-wave optical plate (QW) prior to reflection of the pump wave at the optical plate (1).
